# EUROPÄISCHE PATENTSCHRIFT

(11) **EP 2 580 073 B1**
(45) Veröffentlichungstag und Bekanntmachung des Hinweises auf die Patenterteilung: **20.05.2015**
(21) Anmeldenummer: 11725687.5
(22) Anmeldetag: 07.06.2011
(51) Int. Cl.: B60B 39/02, B60B 39/06, B60B 39/04, B61C 15/10

(54) **KUNSTSTOFFSANDKASTEN FÜR LOKOMOTIVEN**
PLASTIC SANDBOXES FOR LOCOMOTIVES
SABLIÈRE EN PLASTIQUE POUR LOCOMOTIVES

(30) Priorität: 09.06.2010 DE 102010023560
(43) Veröffentlichungstag der Anmeldung: 17.04.2013
(73) Patentinhaber: Siemens Aktiengesellschaft, 80333 München (DE)
(72) Erfinder: STELZLE, Wilfried, 85253 Kleinberghofen (DE); WEBER, Konstantin, 66557 Illingen (DE)
(86) Internationale Anmeldenummer: PCT/EP2011/059387
(87) Internationale Veröffentlichungsnummer: WO 2011/154401

(56) Entgegenhaltungen:
- EP-A2- 0 217 636
- DE-A1- 2 829 098
- DE-A1- 3 143 675
- FR-A- 975 441

## Beschreibung

Die Erfindung betrifft eine Vorrichtung für eine Sandungsanlage mit einem Sandbehälter, der mit Sand befüllbar ist und eine Ausblasöffnung zur Abgabe des Sandes aufweist, Füllstandsüberwachungsmitteln zum Überwachen des Füllstandes des Sandbehälters und Befestigungsmitteln, die zur unter Flur Befestigung der Vorrichtung an einem Schienenfahrzeug eingerichtet sind.

Eine solche Vorrichtung ist beispielsweise aus der DE 10 2004 014 360 D4 bekannt. Dort ist eine Sandungsanlage beschrieben, die mit einem Sandbehälter ausgestattet ist, der über eine in den Sandbehälter hineinragende Druckluftdüse mit Druckluft beaufschlagt werden kann. Der Sandbehälter ist mit Sand befüllt. Beim Öffnen einer Auslassöffnung des Sandbehälters wird die Druckluft zur Atmosphäre hin ausgeblasen, wobei Sand mitgerissen wird. Der mitgerissene Sand wird unmittelbar vor dem Rad eines Schienenfahrzeugs auf eine Schiene geführt.

Aus der DE 31 43 675 A1 ist eine Sandungsanlage bekannt, die zur Verbesserung der Haftung der Reifen eines Kraftfahrzeuges auf einer mit Eis oder Schnee bedeckten Fahrbahn betrifft. Die Sandungsanlage weist einen mit Streugut befüllbaren Behälter auf, der beispielsweise aus einem Kunststoff besteht. Zur Montage des Sandungsbehälters im Frontbereich des Kraftfahrzeugs oberhalb der Stoßstange sind Haltebögen vorgesehen, die mit ihrem einen Ende fest mit dem Kraftfahrzeug verbunden sind. Das andere Ende der Haltebügel ist frei nach oben verbogen. Darüber hinaus kommen elastische Haltebänder zum Einsatz.

Aus der FR 975 441 ist ebenfalls eine Sandungsanlage bekannt, die zur Verbesserung der Haftung eines Reifens eines Kraftfahrzeuges auf der Fahrbahn dient. Der Sandungsbehälter ist an einem Längsträger des Kraftfahrzeugs befestigt. Unterhalb des Sandungsbehälters sind kulissenartige Sandverteilungsmittel angeordnet, die zum Verteilen des Sandes eingerichtet sind, sobald dieser den Sandungsbehälter durch eine Auslassöffnung verlassen hat.

Die DE 28 29 098 beschreibt ebenfalls eine Sandungsanlage für ein Kraftfahrzeug, wobei die Sandungsanlage an der Frontseite des Kraftfahrzeuges durch Befestigungsmittel befestigt werden kann.

Sandungsanlagen werden eingesetzt, um bei Schienenfahrzeugen die Haftreibung zwischen Rad und Schiene im Bedarfsfall zu erhöhen. Dies ist beispielsweise beim Anfahren oder Bremsen des Schienenfahrzeugs erforderlich. Bei Schnellbremsungen, die im Notfall ausgelöst werden, wird die Vorrichtung betätigt, um das Schienenfahrzeug möglichst schnell anhalten zu können. Die Betätigung kann entweder von Hand oder aber auch durch eine Steuerung, also beispielsweise mit Hilfe einer Regelung erfolgen.

Die vorbekannten Vorrichtungen weisen in der Regel einen Sandbehälter aus Aluminium oder Stahl, der als Schweißkörper hergestellt und anschließend lackiert oder pulverbeschichtet wurde. Das Füllvolumen beträgt in der Regel 60 l, wobei ein in den Sandbehälter eingebrachtes durchsichtiges Schauglas die Kontrolle des Füllstandes ermöglicht. Im Bodenbereich des Sandbehälters ist oft ein Flansch verschweißt, an dem eine teilweise in den Sandbehälter hinein ragende Heizeinrichtung befestigt ist. Die Heizeinrichtung dient zum Trocknen des Sandes, so dass ein Einfrieren vermieden wird. Nach dem Einfüllen des Sandes in den Sandungsbehälter wird der Sandungsbehälter druckdicht verschlossen und mit Druck beaufschlagt, um den Sand aus der Ausblasöffnung gezielt zwischen Schiene und Rad zu blasen. Der dabei im Sandbehälter entstehende Überdruck wird in die Atmosphäre ausgeleitet. Vorrichtungen der bisher bekannten Art sind in der Regel unter Flur, also von unten an dem Wagenkasten oder Drehgestell eines Schienenfahrzeugs befestigt.

Aufgabe der Erfindung ist es, eine Vorrichtung der eingangs genannten Art bereitzustellen, die leicht und kostengünstig ist und gleichzeitig den im Schienenverkehr gestellten hohen Sicherheitsanforderungen gerecht wird.

Diese Aufgabe wird erfindungsgemäß dadurch gelöst, dass der Sandbehälter aus einem Kunststoff besteht und die Befestigungsmittel an einem metallischen Traggerüst ausgebildet sind, der mit dem Sandbehälter verbunden ist.

Erfindungsgemäß besteht der Sandbehälter nicht mehr aus einem metallischen Werkstoff wie beim Stand der Technik. Vielmehr ist der Sandbehälter aus einem Kunststoff hergestellt. Der aus Kunststoff bestehende Sandbehälter ist jedoch mittels eines metallischen Traggerüstes an dem Schienenfahrzeug unter Flur befestigbar. Der erfindungsgemäße Sandbehälter ist wesentlich einfacher herstellbar als ein metallischer Sandbehälter, so dass erfindungsgemäß die Kosten einer solchen Vorrichtung herabgesetzt sind. Darüber hinaus kann der Sandbehälter leicht im Unterflurbereich an unterschiedliche Lokomotiven befestigt werden. Ein Austausch alter Sandbehälter ist auf einfache Art und Weise möglich.

Das Kunststoffmaterial wird so ausgewählt, dass der Sandbehälter den im Schienenverkehr herrschenden Anforderungen gerecht wird. Insbesondere weist der Kunststoff eine hohe mechanische Festigkeit, insbesondere eine hohe Stoßfestigkeit auf. Auch die Widerstandsfähigkeit gegen UV-Strahlung ist ausreichend hoch. Darüber hinaus ist der Kunststoff waschmittelbeständig und bis zu Tiefsttemperaturen von -40°C einsetzbar. Die erfindungsgemäße Vorrichtung ist als Bestandteil einer beliebigen Sandungsanlage vorgesehen. Der Sandbehälter kann daher im Rahmen der Erfindung die hierfür notwendigen Ausnehmungen, Öffnungen und Dichtungen aufweisen, um beispielsweise Heizelemente, Düsen zur Druckbeaufschlagung und Dichtmittel aufzunehmen, die ein druckdichtes Verschließen des Sandbehälters ermöglichen. Zweckmäßigerweise ist eine Heizelementöffnung zur Aufnahme eines Heizelementes und eine Düsenöffnung zur Aufnahme einer Druckluftdüse vorgesehen.

Vorteilhafterweise ist der Sandbehälter im oberen Bereich formschlüssig mit dem Traggerüst verbunden, um Verspannungen zu vermeiden und Toleranzen des Kunststoffes besser auffangen zu können. Auf diese Art und Weise ist eine besonders einfache Montage ermöglicht, da der Sandbehälter lediglich in das Traggerüst eingefügt werden muss und anschließend das Traggerüst am Schienenfahrzeug befestigt werden kann. Lediglich im unteren Bereich wird das metallische Traggerüst mit dem Kunststoffbehälter verschraubt und zwar anhand metallischer Befestigungsmittel in der Kunststoffwandung des Sandbehälters. Somit ist der Kunststoffbehälter exakt am Rahmen fixiert und hält hier den Anforderungen im Bahnbetrieb stand.

Zweckmäßigerweise ist der Sandbehälter rundlich ausgebildet, so dass Ecken und Kanten vermieden sind. Die Rundungen erhöhen ebenfalls die Widerstandsfähigkeit und Festigkeit des Sandbehälters, da scharfe Ecken und Kanten das Aufreiben oder Aufplatzen des aus Kunststoff bestehenden Sandbehälters fördern können. Auch gegenüber Stoßbelastungen, die beispielsweise bei schneller Fahrt durch Steinschlag entstehen können, ist eine rundliche Ausgestaltung vorteilhaft.

Zweckmäßigerweise ist der Kunststoff ein quervernetztes Polyethylen. Quervernetztes Polyethylen weist zum Einen den Vorteil auf, das es sehr widerstandsfähig ist. Darüber hinaus erfüllt quervernetztes Polyethylen die oben beschriebenen Anforderungen, also eine hohe Brandfestigkeit sowie eine hohe UV-, Waschmittel- und Tiefsttemperaturbeständigkeit. Ferner widersteht quervernetztes Polyethylen auch den im Schienenverkehr üblicherweise auftretenden Steinschlag und einer 3G-Stoßbelastung. Quervernetztes Polyethylen ist am Markt erhältlich.

Die Füllstandsüberwachungsmittel sind zweckmäßigerweise ein optisch transparentes Schauglas, das in der Wandung eines Sandbehälters eingebracht ist. Gemäß dieser vorteilhaften Weiterentwicklung ist die Überprüfung des Füllstands durch Inaugenscheinnahme ermöglicht. Abweichend hiervon ist der Kunststoffbehälter als Ganzes transparent ausgebildet. Ein Schauglas kann dann natürlich entfallen. Abweichend davon ist es jedoch auch möglich, Füllstandsmelder, die als solche dem Fachmann bekannt sind, in Form von Sensoren im Inneren des Sandbehälters anzubringen, die den Füllstand erfassen und die Messdaten an Bauteile weiterleiten, die im Führerhaus einer Lokomotive angefordert sind.

Gemäß einer bevorzugten Ausgestaltung der Erfindung bildet das Traggerüst Schutzflächen zum Schutz des Sandbehälters vor Stoßbeanspruchung aus. Hierbei stellt das Traggerüst einen flächigen metallischen Schutz dar, der insbesondere an den Stellen des Sandbehälters angeordnet ist, die während des Betriebs einer erhöhten Steinschlaggefahr ausgesetzt sind. Das Traggerüst unterstützt somit die Widerstandsfähigkeit der erfindungsgemäßen Vorrichtung gegenüber Steinschlag und sonstigen Stoßbelastungen.

Das Traggerüst ist beispielsweise bügelförmig und formkomplementär zum Sandbehälter ausgebildet. Auf diese Art und Weise sind zum Einen die Kosten für die erfindungsgemäße Vorrichtung noch weiter herabgesetzt. Das Traggerüst bildet hierbei vorzugsweise eine bauchige, käfigförmige, konkave Aufnahme für den Sandbehälter aus, der anschließend zwischen dem Traggerüst und dem Unterflurbereich des Schienenfahrzeugs eingeklemmt wird. Dieses Verklemmen ermöglicht eine einfache Montage. Darüber hinaus wird die mechanische Festigkeit des Kunststoffs nicht herabgesetzt.

Der Sandbehälter weist zweckmäßigerweise einen Einfüllstutzen zum Einfüllen des Sandes auf.

Weitere zweckmäßige Ausgestaltungen und Vorteile der Erfindung sind Gegenstand der nachfolgenden Beschreibung von Ausführungsbeispielen der Erfindung, wobei gleiche Bezugszeichen auf gleich wirkende Bauteile verweisen und wobei
- Figur 1: ein erstes Ausführungsbeispiel der erfindungsgemäßen Vorrichtung in einer perspektivischen Ansicht von vorne,
- Figur 2: ein weiteres Ausführungsbeispiel der Vorrichtung gemäß Figur 1 in einer perspektivischen Seitenansicht,
- Figur 3: einen Sandbehälter eines weiteren Ausführungsbeispiels der erfindungsgemäßen Vorrichtung,
- Figur 4: ein Traggerüst für den Sandbehälter gemäß Figur 3 und
- Figur 5: den Sandbehälter gemäß Figur 3 und das Traggerüst gemäß Figur 4 im zusammengefügten Zustand zeigen.

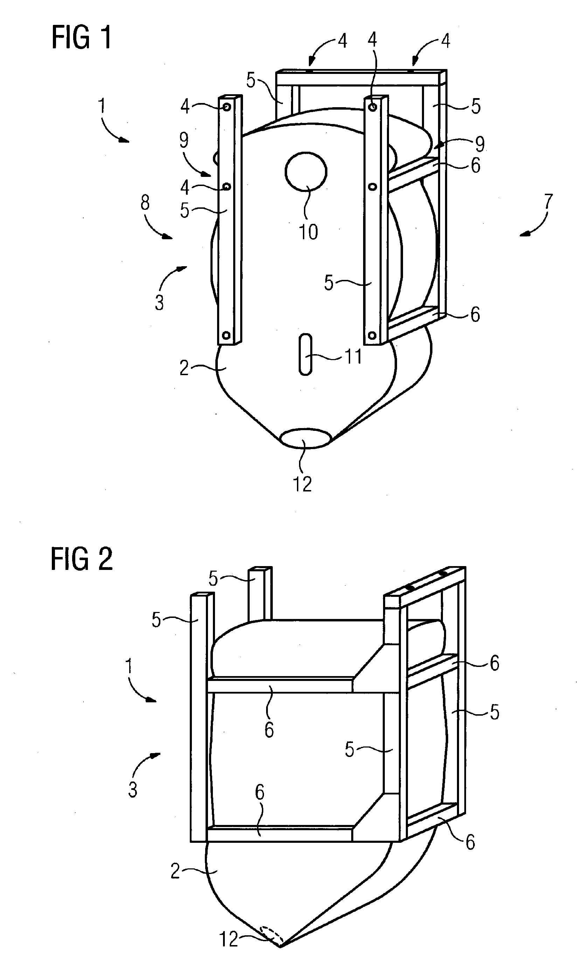

Figur 1 zeigt ein schematisch dargestelltes erstes Ausführungsbeispiel der erfindungsgemäßen Vorrichtung 1, die einen Sandbehälter 2 sowie ein metallisches Traggerüst 3 aufweist. Der Sandbehälter 2 besteht aus einem quervernetzten Polyethylen. Das metallische und mechanisch stabile Traggerüst 3 ist mit nur schematisch angedeuteten Befestigungsöffnungen 4 als Befestigungsmittel ausgerüstet, die eine Befestigung der Vorrichtung 1 unter Flur an ein Schienenfahrzeug ermöglichen. Dabei weist das Traggerüst 3 Längsträger 5 auf, die sich in Figur 1 von unten nach oben erstrecken. Die Längsträger 5 sind durch Querträger 6 miteinander verbunden.

Der Sandbehälter 2 ist in seinen Seitenbereichen 7 und 8 bauchig ausgebildet und bildet Einschnürungen 9 aus, in denen sich die Querträger 6 des Traggerüsts 3 erstrecken. Zur Verbindung des Sandbehälters 2 mit dem Traggerüst 3 werden die Querträger 6 zunächst in die Einschnürungen 9 eingeführt und erst anschließend die Querträger 6 mit den Längsträgern 5 verbunden.

Zum Einfüllen von Sand ist eine Einfüllöffnung 10 in dem Sandbehälter 2 vorgesehen. Im unteren Bereich des Sandbehälters 2 ist ein Schauglas 11 erkennbar, das einen Einblick in das Innere des Sandbehälters 2 gewährt. Auf diese Art und Weise ist eine einfache Füllstandsüberwachung ermöglicht. Im unteren Bereich des Sandbehälters ist eine Ausblasöffnung 12 vorgesehen. Die Aufnahme eines Heizelementes und eine Öffnung zur Aufnahme einer Druckdüse sind in den Figuren nicht gezeigt. Auch gegebenenfalls vorhandene Dosierungsmittel der Sandungsanlage, mit denen die Abgabe der Sandmenge durch die Ausblasöffnung 12 gesteuert werden kann, sind aus Gründen der besseren Übersicht in den Figuren ebenfalls nicht verdeutlicht.

Figur 2 zeigt das Ausführungsbeispiel gemäß Figur 1 in einer Seitenansicht. In dieser Ansicht ist erkennbar, dass die Querträger 6 über flächige Verbindungsdreiecke mit den Längsträgern 5 verbunden sind.

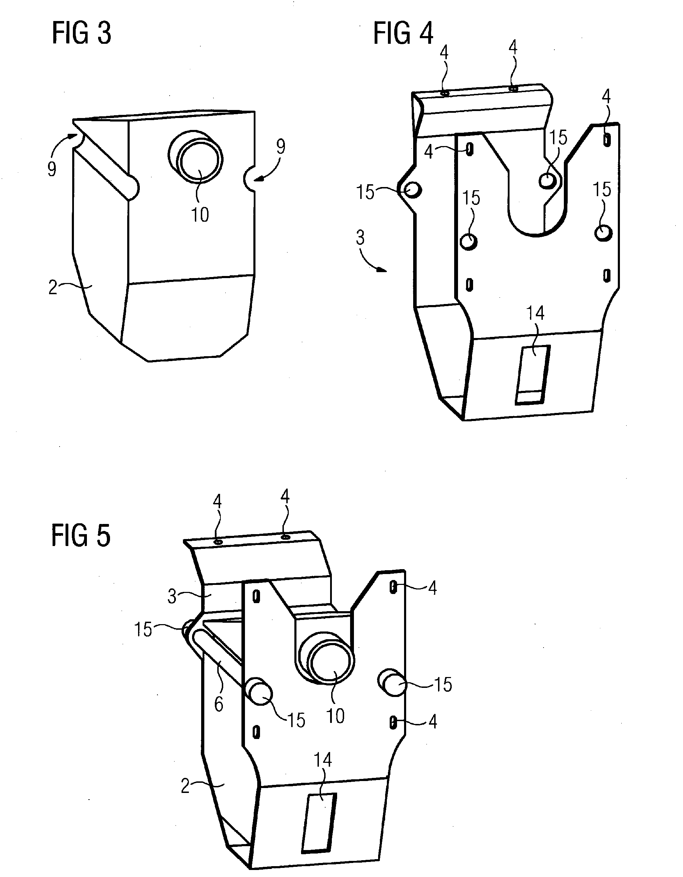

Figur 3 zeigt einen Sandbehälter 2 eines weiteren Ausführungsbeispiels der erfindungsgemäßen Vorrichtung 1. Der Sandbehälter 2 ist wieder aus einem quervernetzten Polyethylen hergestellt und weist in seinem oberen Bereich die Einfüllöffnung 10 auf. In Abweichung zu dem in Figur 1 gezeigten Ausführungsbeispiel ist der gesamte Sandbehälter 2 transparent ausgestaltet, so dass die Inaugenscheinnahme des Füllstandes ermöglicht ist. Ferner sind Einschnürungen 9 im Sandbehälter 2 erkennbar, welche die formschlüssige Verbindung mit einem Traggerüst unterstützen. Die Ausblasöffnung ist in der Bodenwandung des Sandbehälters 2 ausgebildet und in Figur 2 nicht erkennbar.

Figur 4 zeigt Teile eines Traggerüsts 3, das bügelförmig ausgebildet ist und Befestigungsmittel 4 zur Befestigung der gesamten Vorrichtung 1 unter Flur an ein Schienenfahrzeug aufweist. Dabei ist das Traggerüst 3 formkomplementär zum Sandbehälter 2 in dem Sinne ausgestaltet, dass eine passende Aufnahme des Sandbehälters 2 in das Traggerüst 3 ermöglicht ist. Dabei liegt das Traggerüst an dem Sandbehälter 2 an, so dass ein fester Halt beim Verklemmen ermöglicht ist. Im unteren Bereich weist das Traggerüst 3 eine Ausnehmung 14 auf. Diese Ausnehmung 14 kennzeichnet den kritischen Bereich des Restfüllstandes des Sandes im Sandbehälter 2. Das Erreichen des Füllstandes in diesem Bereich signalisiert den Bahnbetreiber, dass der Sand in Sandbehälter 2 nachgefüllt werden muss.

Ferner sind Montageöffnungen 15 vorgesehen, auf die in Verbindung mit Figur 5 genauer eingegangen werden wird. Im Gegensatz zum Traggerüst gemäß Figur 1 oder 2 bildet das in Figur 4 dargestellte Traggerüst 3 Schutzflächen 15 aus, welche im montierten Zustand die Wandungen des Sandbehälters 2 bedecken. Auf diese Weise ist ein zusätzlicher Schutz gegenüber Steinschlag und sonstigen Beanspruchungen bereitgestellt.

Figur 5 zeigt den Sandbehälter 2 gemäß Figur 3 und das Traggerüst 3 gemäß Figur 4 im zusammengebauten Zustand. Hier ist besonders gut erkennbar, dass der Sandbehälter 2 und das Traggerüst 3 formkomplementär ausgebildet sind und eine passende Aufnahme des Sandbehälters 2 in den Traggerüst 3 ermöglicht ist. Ferner ist erkennbar, dass die Montageöffnungen 15 zur Befestigung einer Querverstrebung 6 dienen, die sich durch die Einschnürung 9 des Sandbehälters 2 erstrecken. Auf diese Art und Weise ist eine besonders sichere und feste formschlüssige Verbindung zwischen Traggerüst 3 und Sandbehälter 2 bereitgestellt.

Die Ausnehmung 14 wirkt, wie oben beschrieben, als Warnzone mit dem Hintergrund, dass wenn in der Ausnehmung 14 die Sandoberkante im transparenten Sandbehälter erkennbar ist, eine Wiederbefüllung durch das Wartungspersonal von Nöten ist. Auch ist dargestellt, dass die Schutzflächen 15 des Traggerüsts 3 den Sandbehälter 2 umfänglich bedecken, so dass die Widerstandsfähigkeit der Vorrichtung 1 vor Stoßbelastungen deutlich erhöht ist. Das Traggerüst 3 besteht beispielsweise aus Stahl oder Aluminium.

## Patentansprüche

1. Vorrichtung (1) für eine Sandungsanlage mit einem Sandbehälter (2), der mit Sand befüllbar ist und eine Ausblasöffnung (12) zur Abgabe des Sandes aufweist, Füllstandsüberwachungsmitteln (11, 14) zum Überwachen des Füllstandes des Sandbehälters und Befestigungsmitteln (4), die zur Befestigung der Vorrichtung (1) unter Flur an einem Schienenfahrzeug eingerichtet sind,
**dadurch gekennzeichnet, dass** der Sandbehälter (2) aus einem Kunststoff besteht und die Befestigungsmittel (4) an einem metallischen Traggerüst (3) ausgebildet sind, der mit dem Sandbehälter (2) verbunden ist.

2. Vorrichtung (1) nach Anspruch 1,
**dadurch gekennzeichnet, dass** der Sandbehälter (2) formschlüssig mit dem Traggerüst (3) verbunden ist.

3. Vorrichtung (1) nach Anspruch 1 oder 2,
**dadurch gekennzeichnet, dass** der Sandbehälter (2) rundlich ausgebildet ist, so dass Ecken und Kanten vermieden sind.

4. Vorrichtung (1) nach einem der vorhergehenden Ansprüche,
**dadurch gekennzeichnet, dass** der Kunststoff ein quervernetzter Polyethylen ist.

5. Vorrichtung (1) nach einem der vorhergehenden Ansprüche,
**dadurch gekennzeichnet, dass** die Füllstandsüberwachungsmittel durch einen optisch transparenten Sandbehälter (2) realisiert sind.

6. Vorrichtung (1) nach einem der vorhergehenden Ansprüche,
**dadurch gekennzeichnet, dass** das Traggerüst (3) Schutzflächen (15) zum Schutz des Sandbehälters (2) vor Stoßbeanspruchungen ausbildet.

7. Vorrichtung (1) nach Anspruch 6,
**dadurch gekennzeichnet, dass** das Traggerüst (3) bügelförmig ausgestattet ist.

8. Vorrichtung (1) nach einem der vorhergehenden Ansprüche,
**dadurch gekennzeichnet, dass** der Sandbehälter (2) eine Einfüllöffnung zum Einfüllen des Sandes aufweist.

## Claims

1. Device (1) for a sanding system, having a sand container (2), which can be filled with sand and has a discharge opening (12) for dispensing the sand, fill level monitoring means (11, 14) for monitoring the fill state of the sand container and fixing means (4), which are configured to fix the device (1) to a rail vehicle below the floor level thereof,
**characterised in that**
the sand container (2) is composed of a plastic and the fixing means (4) are embodied on a metallic supporting frame (3) which is connected to the sand container (2).

2. Device (1) according to claim 1,
**characterised in that**
the sand container (2) is connected to the support frame (3) in a form-fit manner.

3. Device (1) according to claim 1 or 2,
**characterised in that**
the sand container (2) is embodied to be rounded, so that corners and edges are avoided.

4. Device (1) according to one of the preceding claims,
**characterised in that**
the plastic is a cross-linked polyethylene.

5. Device (1) according to one of the preceding claims,
**characterised in that**
the fill level monitoring means are realised by an optically transparent sand container (2).

6. Device (1) according to one of the preceding claims,
**characterised in that**
the support frame (3) forms protection surfaces (15) for protecting the sand container (2) from impact stresses.

7. Device (1) according to claim 6,
**characterised in that**
the support frame (3) is fitted in a yoke-shaped manner.

8. Device (1) according to one of the preceding claims,
**characterised in that**
the sand container (2) has a feed opening for feeding in the sand.

## Revendications

1. Dispositif ( 1 ) pour une sablière ayant un récipient ( 2 ) à sable, qui peut être rempli de sable, et une ouverture ( 12 ) de sortie pour céder du sable, des moyens ( 11, 14 ) de contrôle de niveau pour contrôler le niveau du récipient à sable et des moyens ( 4 ) de fixation, qui sont conçus pour fixer le dispositif ( 1 ) sous un véhicule ferroviaire,
**caractérisé en ce que**
le récipient ( 2 ) à sable est en une matière plastique et les moyens ( 4 ) de fixation sont constitués sur un cadre ( 3 ) porteur métallique, qui est relié au récipient ( 2 ) à sable.

2. Dispositif ( 1 ) suivant la revendication 1,
**caractérisé en ce que**
le récipient ( 2 ) à sable est relié à complémentarité de forme au cadre ( 3 ) porteur.

3. Dispositif ( 1 ) suivant la revendication 1 ou 2,
**caractérisé en ce que**
le récipient ( 2 ) à sable est de constitution ronde, de manière à n'avoir ni de sommet ni d'arête.

4. Dispositif ( 1 ) suivant l'une des revendications précédentes,
**caractérisé en ce que**
la matière plastique est un polyéthylène réticulé transversalement.

5. Dispositif ( 1 ) suivant l'une des revendications précédentes,
**caractérisé en ce que**
les moyens de contrôle de niveau sont réalisés par un récipient ( 2 ) à sable transparent visuellement.

6. Dispositif ( 1 ) suivant l'une des revendications précédentes,
**caractérisé en ce que**
le cadre ( 3 ) porteur forme des surfaces ( 15 ) de protection du récipient ( 2 ) à sable vis-à-vis de chocs.

7. Dispositif ( 1 ) suivant la revendication 6,
**caractérisé en ce que**
le cadre ( 3 ) porteur est en forme d'étrier.

8. Dispositif ( 1 ) suivant l'une des revendications précédentes,
**caractérisé en ce que**
le récipient ( 2 ) à sable a une ouverture de remplissage par laquelle il peut être rempli de sable.
